# EUROPÄISCHE PATENTSCHRIFT

(11) **EP 2 837 265 B1**
(45) Veröffentlichungstag und Bekanntmachung des Hinweises auf die Patenterteilung: **19.07.2017**
(21) Anmeldenummer: 13727503.8
(22) Anmeldetag: 15.04.2013
(51) Int. Cl.: H05B 33/08, H05B 41/28

(54) **WANDLER FÜR EIN LEUCHTMITTEL, LED-KONVERTER UND VERFAHREN ZUM BETREIBEN EINES LLC-RESONANZWANDLERS**
TRANSFORMER FOR A LAMP, LED CONVERTER, AND METHOD FOR OPERATING AN LLC RESONANT TRANSFORMER
TRANSDUCTEUR POUR UN MOYEN D'ÉCLAIRAGE, CONVERTISSEUR DEL ET PROCÉDÉ POUR FAIRE FONCTIONNER UN TRANSDUCTEUR RÉSONANT LLC

(30) Priorität: 13.04.2012 DE 102012007450
(43) Veröffentlichungstag der Anmeldung: 18.02.2015
(73) Patentinhaber: Tridonic GmbH & Co. KG, 6851 Dornbirn (AT)
(72) Erfinder: MITTERBACHER, Andre, A-6850 Dornbirn (AT); MARENT, Günter, A-6780 Batholomäberg (AT); VONACH, Christoph, A-6850 Dornbirn (AT)
(74) Vertreter: Banzer, Hans-Jörg
(86) Internationale Anmeldenummer: PCT/AT2013/000066
(87) Internationale Veröffentlichungsnummer: WO 2013/152369

(56) Entgegenhaltungen:
- EP-A1- 2 204 898
- WO-A1-89/01234
- WO-A1-2004/057921
- US-A- 5 747 942

## Beschreibung

Die Erfindung betrifft einen Wandler zur Versorgung eines Leuchtmittels, einen LED-Konverter und ein Verfahren zum Betreiben eines derartigen Wandlers. Die Erfindung betrifft insbesondere derartige Vorrichtungen und Verfahren, bei denen ein Leuchtmittel, insbesondere ein Leuchtmittel, das ein oder mehrere Leuchtdioden umfasst, mit einem so genannten SELV ("Separated Extra-Low Voltage" oder "Safety Extra-Low Voltage")-Gerät mit Energie versorgt wird und eine Helligkeit des Leuchtmittels gesteuert werden kann.

Wandler mit Potentialtrennung dienen zur galvanisch entkoppelten Übertragung von elektrischer Energie von einer Eingangsseite zu einer Ausgangsseite. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter, die in Form von Leistungsschaltern ausgestaltet sein können, verwendet und getaktet betrieben, um elektrische Energie auf die Ausgangsseite zu übertragen. Eine galvanisch entkoppelte Energieübertragung kann durch Verwendung eines Transformators oder anderen Übertragers erzielt werden. Eine derartige galvanische Trennung bzw. Potentialtrennung wird aus Sicherheitsgründen bei Betriebsgeräten für Leuchtmittel gefordert, um einen ELV ("Extra-Low Voltage")-Bereich durch eine so genannte Potentialbarriere oder SELV-Barriere von Bereichen mit höherer Versorgungsspannung, insbesondere Netzspannung, zu trennen.

Zum Betreiben von Leuchtmitteln können Wandler eingesetzt werden, die als so genannte Resonanzwandler ausgestaltet sind, die einen Resonanzkreis aufweisen. Der Resonanzkreis kann ein Serien- oder Parallelresonanzkreis sein. Bei der Ausgestaltung von Wandlern besteht das Ziel, Verluste gering zu halten. Resonanzwandler, die einen LLC-Resonanzkreis mit zwei Induktivitäten und einer Kapazität umfassen, können primärseitig resonant oder quasiresonant gesteuert werden. Derartige Wandler haben den Vorteil, dass ein e-nergieeffizienter Betrieb mit relativ geringen Schaltverlusten möglich ist.

Für verbesserte Kontroll- und Einstellmöglichkeiten in Beleuchtungssystemen werden Wandler eingesetzt, die eine Helligkeitssteuerung bzw. ein "Dimmen" der Helligkeit erlauben. Verschiedene Techniken zur Helligkeitssteuerung sind bekannt. Beispielsweise können in einem Wandler entsprechende Steuersignale erzeugt werden, mit denen das dem Wandler zugeführte Eingangssignal und/oder die Wirkungsweise des Wandlers beeinflusst werden, um die Energieübertragung von einer Primärseite zu einer Sekundärseite des Wandlers zu kontrollieren. Beispiele für derartige Helligkeitssteuerungen beschreiben die EP 0 466 031 B1 und die DE 195 00 615 B4.

Die US 5 747 942, die als Basis für den Oberbegriff der unabhängigen Ansprüche dient, offenbart ein Vorschaltgerät für eine Gasentladungslampe, das eine Oszillatorsteuerung und ein Resonanzelement umfasst.

Die WO 2004/057921 A1 offenbart eine LED-Betriebsschaltung mit einer Steuereinrichtung, die eingerichtet ist, um einem einzigen Schalter ein zweifach pulsweitenmoduliertes Signal zuzuführen.

Die WO 89/01234 A1 offenbart eine Betriebsschaltung für ein Magnetron.

Die EP 2 204 898 A1 offenbart eine LED-Betriebsschaltung, die Resonanzwandler aufweist.

Ein weiterer Ansatz zur Helligkeitssteuerung kann die Verwendung von Leistungsschaltern auf der Sekundärseite des Wandlers beinhalten. Derartige Betriebsgeräte können insbesondere auch bei Leuchtmitteln eingesetzt werden, die kein Amplitudendimmen erlauben. Zum Steuern der Schalter auf der Sekundärseite muss jedoch entweder eine separate Logik auf der Sekundärseite vorgesehen werden und/oder die SELV-Barriere muss zur Steuerung der Schalter durch einen entsprechenden Signalpfad überbrückt werden. Die Schalter auf der Sekundärseite verursachen zusätzlichen schaltungstechnischen Aufwand.

Allgemein ist es wünschenswert, Wandler für Leuchtmittel, insbesondere für LEDs, und LED-Konverter so auszugestalten, dass eine Dimmbarkeit über einen weiten Bereich möglich ist. Herkömmliche Ansätze, bei denen beispielsweise nur eine Schaltfrequenz einer Halb- oder Vollbrückenschaltung kontrolliert wird, um die Energieübertragung zu verändern, stoßen an Grenzen, wenn zu sehr niedrigen Helligkeiten gedimmt werden soll.

Es ist auch wünschenswert, Wandler und LED-Konverter so auszugestalten, dass eine Dimmbarkeit über einen weiten Bereich möglich ist, ohne dass die entsprechenden Schaltungskomponenten die Herstellungskosten des Wandlers oder LED-Konverters signifikant erhöhen.

Zunehmend kommen auch Leuchtmittel zum Einsatz, die nicht für Amplitudendimmen ausgelegt sind. Derartige Leuchtmittel finden beispielsweise bei der Farbtemperatursteuerung Anwendung. Es ist auch wünschenswert, Vorrichtungen und Verfahren anzugeben, die auch für die Verwendung bei Leuchtmitteln geeignet sind, die kein Amplitudendimmen erlauben.

Es besteht ein Bedarf an Vorrichtungen und Verfahren, die Verbesserungen im Hinblick auf die genannten Ziele bieten. Insbesondere besteht ein Bedarf an Vorrichtungen und Verfahren, bei denen der schaltungstechnische Aufwand und/oder die Kosten, die für eine Dimmbarkeit über einen weiten Bereich erforderlich sind, moderat gehalten werden können. Es besteht auch ein Bedarf an derartigen Vorrichtungen und Verfahren, die eine effiziente Energieübertragung erlauben.

Erfindungsgemäß werden ein Wandler, ein LED-Konverter ein Verfahren mit den in den unabhängigen Ansprüchen angegebenen Merkmalen angegeben. Die abhängigen Ansprüche definieren Ausführungsformen.

Nach Ausführungsbeispielen der Erfindung weist ein LLC-Resonanzwandler, der eine primärseitige Halbbrücke und einen LLC-Resonanzkreis umfasst, eine Steuereinrichtung auf, die in einem ersten Betriebsmodus und in einem zweiten Betriebsmodus zur Helligkeitssteuerung arbeiten kann. Die Steuereinrichtung kann als integrierte Halbleiterschaltung, beispielsweise als anwendungsspezifische integrierte Halbleiterschaltung (ASIC, "Application Specific Integrated Circuit"), oder als anderer Chip (integrierter Schaltkreis) ausgestaltet sein. Im ersten Betriebsmodus realisiert die Steuereinrichtung ein Amplitudendimmen, wobei sie die Schaltfrequenz, mit der die Schalter der Halbbrücke getaktet geschaltet werden, so einstellt, dass eine gewünschte Helligkeit erreicht wird. Im zweiten Betriebsmodus steuert die Steuereinrichtung die Halbbrücke so, dass am Ausgang des Wandlers ein gepulstes Signal erzeugt wird, so dass die Helligkeit durch Pulsweitenmodulation eingestellt werden kann. Dazu kann die Steuereinrichtung im zweiten Betriebsmodus nach mehreren Schaltzyklen der Schalter der Halbbrücke jeweils beide Schalter der Halbbrücke für einen vorgegebenen Zeitraum gleichzeitig in den Aus-Zustand schalten. Die Dauer des vorgegebenen Zeitraums kann länger, insbesondere viel länger als die Dauer eines vorhergehenden Schaltzyklus der Schalter sein. Nach dem vorgegebenen Zeitraum können die Schalter wieder für einen anderen vorgegebenen Zeitraum getaktet geschaltet werden, bevor anschließend wieder beide Schalter in den Aus-Zustand geschaltet werden. Durch einen derartigen Betrieb, bei dem das getaktete Schalten der Schalter der Halbbrücke gemäß einem niederfrequenteren Modulationssignal zur Pulsweitenmodulation zyklisch deaktiviert und wieder aktiviert wird, kann am Ausgang des Wandlers ein pulsweitenmoduliertes Ausgangssignal erzeugt werden. Die Frequenz der Pulsung des Signals ist dabei so hoch gewählt, dass die Zeiträume, in denen das Ausgangssignal des Wandlers auf Null geht, aufgrund der Trägheit des menschlichen Auges nicht wahrgenommen werden. Jedoch wird vom menschlichen Auge die Verringerung der zeitlich gemittelten Helligkeit aufgrund der Pulsweitenmodulation wahrgenommen.

Nach Ausführungsbeispielen kann somit eine Steuereinrichtung des Wandlers den Wandler in zwei unterschiedlichen Betriebsarten betreiben. Sowohl eine Amplitudenmodulation als auch eine Pulsweitenmodulation zur Helligkeitssteuerung können durch die Einwirkung einer integrierten Halbleiterschaltung, beispielsweise einer ASIC oder eines anderen Chips, auf dieselben Leistungsschalter in der primärseitigen Schaltung des LLC-Resonanzwandlers realisiert werden. Die Verwendung von Leistungsschaltern auf der Sekundärseite des Wandlers ist zur Helligkeitssteuerung durch Pulsweitenmodulation nicht mehr unbedingt erforderlich.

Derartige Wandler und entsprechende LED-Konverter können in verschiedenen Anwendungen eingesetzt werden. Wird der Wandler bzw. LED-Konverter zum Betreiben eines Leuchtmittels eingesetzt, das Amplitudendimmen erlaubt, kann die Steuereinrichtung abhängig von der einzustellenden Helligkeit wahlweise Amplitudendimmen oder Dimmen durch Pulsweitenmodulation anwenden. Für größere Helligkeiten kann Amplitudendimmen eingesetzt werden. Für kleinere Helligkeiten kann Dimmen durch Pulsweitenmodulation eingesetzt werden. Abhängig von einem Vergleich der einzustellenden Helligkeit mit einem Schwellenwert kann die Steuereinrichtung zwischen dem ersten Betriebsmodus und dem zweiten Betriebsmodus umschalten.

Wird der Wandler bzw. LED-Konverter zum Betreiben eines Leuchtmittels eingesetzt, das kein Amplitudendimmen erlaubt, kann die Steuereinrichtung immer im zweiten Betriebsmodus arbeiten. Dies erlaubt, den Wandler bzw. LED-Konverter auch für eine Helligkeitssteuerung von Leuchtmitteln einzusetzen, die kein Amplitudendimmen erlauben.

Nach einem Ausführungsbeispiel wird ein Wandler für ein Leuchtmittel angegeben. Der Wandler umfasst eine primärseitige Schaltung und eine davon galvanisch getrennte Sekundärseite. Die primärseitige Schaltung weist eine Halbbrückenschaltung, die einen ersten Schalter und einen zweiten Schalter umfasst, und einen mit einem Knoten zwischen den Schaltern der Halbbrücke verbundenen LLC-Resonanzkreis auf. Die Sekundärseite weist einen Ausgang zur Energieversorgung des Leuchtmittels auf. Der Wandler umfasst eine Steuereinrichtung zum Steuern des ersten Schalters und des zweiten Schalters der Halbbrückenschaltung. Die Steuereinrichtung ist eingerichtet, um zum Einstellen einer Helligkeit in einem ersten Betriebsmodus eine Schaltfrequenz des ersten Schalters und des zweiten Schalters einzustellen. Die Steuereinrichtung ist eingerichtet, um zum Einstellen der Helligkeit in einem zweiten Betriebsmodus den ersten Schalter und den zweiten Schalter derart zu steuern, dass am Ausgang der Sekundärseite ein pulsweitenmoduliertes Ausgangssignal erzeugt wird.

Ein derartiger Wandler kann wahlweise so betrieben werden, dass eine Helligkeitssteuerung über Amplitudendimmen oder über Pulsweitenmodulation des Ausgangssignals des Wandlers erfolgt. Eine Steuereinrichtung kann beide Funktionen erfüllen.

Die Steuereinrichtung ist eingerichtet, um in dem zweiten Betriebsmodus während eines ersten Zeitabschnitts ein getaktetes Schalten des ersten Schalters und des zweiten Schalters zu bewirken, und während eines zweiten Zeitabschnitts sowohl den ersten Schalter als auch den zweiten Schalter in einen Aus-Zustand zu schalten. Dadurch kann eine Pulsweitenmodulation unter Verwendung der Halbbrückenschaltung und insbesondere durch eine Steuerung auf der Primärseite des Wandlers erreicht werden.

Der erste Zeitabschnitt und der zweite Zeitabschnitt können zyklisch wiederholt werden. D.h., im zweiten Betriebsmodus kann ein wechselseitig getaktetes Schalten der Schalter der Halbbrücke jeweils nach einer bestimmten ersten Zeitdauer eines ersten Zeitabschnitts deaktiviert werden und dann nach einer zweiten Zeitdauer eines zweiten Zeitabschnitts, in dem beide Schalter im Aus-Zustand bleiben, wieder begonnen werden. Sowohl die Dauer des ersten Zeitabschnitts als auch die Dauer des zweiten Zeitabschnitts kann größer sein als eine Periode einer Resonanzschwingung des LLC-Resonanzkreises. Die Dauer des zweiten Zeitabschnitts kann so kurz sein, dass sie aufgrund der Trägheit des menschlichen Auges nicht detektierbar ist.

Die Steuereinrichtung kann eingerichtet sein, um im zweiten Betriebsmodus während des ersten Zeitabschnitts ein Schalten des ersten Schalters und des zweiten Schalters zu bewirken, wobei ein Schaltzyklus jeweils eine Schaltzyklusdauer aufweist. Eine Dauer des zweiten Zeitabschnitts kann größer sein als die Schaltzyklusdauer. Insbesondere können im zweiten Betriebsmodus beide Schalter nach mehreren Schaltzyklen jeweils für einen Zeitraum in den Aus-Zustand geschaltet werden, der länger ist als die Dauer eines vorhergehenden Schaltzyklus. Die Dauer des zweiten Zeitabschnitts kann ein geradzahliges Vielfaches der Schaltzyklusdauer sein. Die Dauer des ersten Zeitabschnitts kann ein geradzahliges Vielfaches der Schaltzyklusdauer sein. Eine derartige Ausgestaltung erlaubt einfache Realisierungen der Steuerung. Beispielsweise kann ein Schaltsignalgenerator mit einer bestimmten Frequenz Signale zum Steuern der Schalter der Halbbrücke erzeugen, und eine Einheit zur Pulsweitenmodulation kann diese Signale mit einem niederfrequenten Signal zur Pulsweitenmodulation multiplizieren.

Die Steuereinrichtung kann eingerichtet sein, um in dem zweiten Betriebsmodus eine Dauer des ersten Zeitabschnitts und/oder eine Dauer des zweiten Zeitabschnitts abhängig von einer Soll-Helligkeit des Leuchtmittels einzustellen.

In dem ersten Betriebsmodus kann die Schaltfrequenz von der Steuereinrichtung aus einer Mehrzahl verschiedener Schaltfrequenzen wählbar sein. In dem zweiten Betriebsmodus kann nur ein Teil der Mehrzahl verschiedener Schaltfrequenzen von der Steuereinrichtung zum getakteten Schalten des ersten Schalters und des zweiten Schalters während des ersten Zeitabschnitts wählbar sein. Da im zweiten Betriebsmodus eine Helligkeitssteuerung über Pulsweitenmodulation erfolgt, kann die Schaltfrequenz in den ersten Zeitabschnitten, in denen die Schalter der Halbbrücke im zweiten Betriebsmodus getaktet geschaltet werden, aus einem Frequenzintervall gewählt werden, bei dem die Verluste des Wandlers klein sind. Dadurch kann eine effiziente Energieübertragung erreicht werden.

Eine von der Steuereinrichtung in dem ersten Betriebsmodus wählbare maximale Schaltfrequenz kann größer sein als eine von der Steuereinrichtung in dem zweiten Betriebsmodus wählbare maximale Schaltfrequenz zum getakteten Schalten des ersten Schalters und des zweiten Schalters. Da im zweiten Betriebsmodus eine Helligkeitssteuerung über Pulsweitenmodulation erfolgt, kann die Schaltfrequenz in den ersten Zeitabschnitten, in denen die Schalter der Halbbrücke im zweiten Betriebsmodus getaktet geschaltet werden, aus einem Frequenzintervall gewählt werden, bei dem die Verluste des Wandlers klein sind. Dadurch kann eine effiziente Energieübertragung erreicht werden.

Die Steuereinrichtung kann eingerichtet sein, um abhängig von einem empfangenen Dimmbefehl selektiv einen Betriebsmodus aus dem ersten Betriebsmodus und dem zweiten Betriebsmodus auszuwählen und die Schalter entsprechend dem ausgewählten Betriebsmodus zu steuern. Dadurch kann ein Amplitudendimmen erfolgen, so lange die Helligkeit nur schwach gedimmt wird. Bei stärkerem Dimmen kann dieselbe Steuereinrichtung immer noch durch Ansteuerung der Halbbrücke auf der Primärseite des LLC-Resonanzwandlers eine Pulsweitenmodulation realisieren. Ein Übergang zwischen erstem und zweiten Betriebsmodus kann automatisch abhängig von einem Schwellenwertvergleich eines Helligkeitswerts, der angenommen werden soll, durchgeführt werden. Der Helligkeitswert kann beispielsweise in einem Dimmbefehl enthalten sein oder von einem Regler zur Helligkeitsregelung geliefert werden. Der Dimmbefehl kann beispielsweise ein Dimmbefehl nach dem DALI ("Digital Addressable Lighting Interface")-Standard sein.

Die Steuereinrichtung kann eingerichtet sein, um zur Verringerung der Helligkeit unter einen Schwellenwert von dem ersten Betriebsmodus in den zweiten Betriebsmodus umzuschalten.

Die Steuereinrichtung kann eingerichtet sein, um zu ermitteln, ob das Leuchtmittel ein Amplitudendimmen erlaubt. Dies kann beispielsweise abhängig von einem Signal an einem Eingang der Steuereinrichtung erfolgen, das erlaubt, einen Betrieb der Steuereinrichtung im zweiten Betriebsmodus zu erzwingen, oder abhängig von einer automatischen Erkennung des Leuchtmittels durch die Steuereinrichtung. Die Steuereinrichtung kann eingerichtet sein, um nur im zweiten Betriebsmodus zu arbeiten, wenn das Leuchtmittel kein Amplitudendimmen erlaubt.

Die Steuereinrichtung, die die beschriebenen Arbeitsvorgänge und Funktionen ausfüllt, kann eine integrierte Halbleiterschaltung umfassen. Die integrierte Halbleiterschaltung kann eingerichtet sein, um den ersten Schalter und den zweiten Schalter der Halbbrückenschaltung sowohl im ersten Betriebsmodus als auch im zweiten Betriebsmodus zu steuern.

Nach einem weiteren Ausführungsbeispiel wird ein LED-Konverter bereitgestellt, der den Wandler nach einem Ausführungsbeispiel umfasst.

Nach einem weiteren Ausführungsbeispiel wird ein Beleuchtungssystem angegeben, das den LED-Konverter und ein damit gekoppeltes Leuchtmittel umfasst. Das Leuchtmittel kann ein oder mehrere Leuchtdioden (LEDs) umfassen. Die LEDs können anorganische und/oder organische LEDs umfassen. Die LEDs können in ein LED-Modul integriert sein, das separat von dem LED-Konverter ausgeführt ist. Das Beleuchtungssystem kann weiterhin eine zentrale Steuerung umfassen, die eingerichtet ist, um Dimmbefehle an den LED-Konverter zu übermitteln oder vom LED-Konverter übertragene Signale auszuwerten.

Nach einem weiteren Ausführungsbeispiel wird eine integrierte Halbleiterschaltung zur Steuerung eines LLC-Resonanzwandlers für ein Leuchtmittel angegeben. Die integrierte Halbleiterschaltung weist Ausgänge auf, um Steuersignale an einen ersten Schalter und einen zweiten Schalter einer Halbbrückenschaltung auf der Primärseite des LLC-Resonanzwandlers auszugeben. Die integrierte Halbleiterschaltung ist eingerichtet, um zum Einstellen einer Helligkeit in einem ersten Betriebsmodus eine Schaltfrequenz des ersten Schalters und des zweiten Schalters einzustellen. Die integrierte Halbleiterschaltung ist eingerichtet, um zum Einstellen der Helligkeit in einem zweiten Betriebsmodus den ersten Schalter und den zweiten Schalter so zu steuern, dass ein pulsweitenmoduliertes Ausgangssignal des LLC-Resonanzwandlers erzeugt wird.

Eine derartige integrierte Halbleiterschaltung stellt eine Dimmbarkeit über einen weiten Bereich bereit und kann für Betriebsgeräte unterschiedlicher Leuchtmittel eingesetzt werden. Wird die integrierte Halbleiterschaltung in einem Betriebsgerät für ein Leuchtmittel verwendet, das Amplitudendimmen erlaubt, kann die Steuereinrichtung abhängig von der einzustellenden Helligkeit wahlweise Amplitudendimmen oder Dimmen durch Pulsweitenmodulation anwenden. Abhängig von einem Vergleich der einzustellenden Helligkeit mit einem Schwellenwert kann die integrierte Halbleiterschaltung zwischen dem ersten Betriebsmodus und dem zweiten Betriebsmodus umschalten. Wird die integrierte Halbleiterschaltung in einem Betriebsgerät für ein Leuchtmittel verwendet, das kein Amplitudendimmen erlaubt, kann die integrierte Halbleiterschaltung immer im zweiten Betriebsmodus arbeiten.

Die integrierte Halbleiterschaltung kann einen Schaltungsabschnitt zum Auswählen eines Betriebsmodus aus dem ersten Betriebsmodus und dem zweiten Betriebsmodus aufweisen. Die integrierte Halbleiterschaltung kann einen Schaltungsabschnitt zum Erzeugen von mit einer einstellbaren Schaltfrequenz getakteten Signalen aufweisen. Die integrierte Halbleiterschaltung kann einen Schaltungsabschnitt zur Pulsweitenmodulation aufweisen, der eingerichtet ist, um ein Pulsweitenmodulationssignal zu erzeugen. Das Pulsweitenmodulationssignal kann eine Frequenz aufweisen, die kleiner als Schaltfrequenz der Schalter ist.

Nach einem weiteren Ausführungsbeispiel wird ein Verfahren zum Betreiben eines LLC-Resonanzwandlers für ein Leuchtmittel angegeben. Der LLC-Resonanzwandler umfasst eine primärseitige Schaltung und eine davon galvanisch getrennte Sekundärseite. Die primärseitige Schaltung weist eine Halbbrückenschaltung, die einen ersten Schalter und einen zweiten Schalter umfasst, und einen mit einem Knoten zwischen den Schaltern der Halbbrücke verbundenen LLC-Resonanzkreis auf. Die Sekundärseite weist einen Ausgang zur Energieversorgung des Leuchtmittels auf. Bei dem Verfahren wird ein Betriebsmodus ausgewählt, der zum Einstellen einer Helligkeit des Leuchtmittels verwendet wird. In einem ersten Betriebsmodus wird zum Einstellen der Helligkeit eine Schaltfrequenz des ersten Schalters und des zweiten Schalters eingestellt. In einem zweiten Betriebsmodus wird zum Einstellen der Helligkeit der erste Schalter und der zweite Schalter derart gesteuert werden, dass am Ausgang der Sekundärseite ein pulsweitenmoduliertes Ausgangssignal erzeugt wird.

Eine integrierte Halbleiterschaltung kann den ersten Schalter und den zweiten Schalter sowohl im ersten Betriebsmodus als auch im zweiten Betriebsmodus steuern. Die Art der Steuerung ist dabei abhängig vom Betriebsmodus unterschiedlich. Beispielsweise können im zweiten Betriebsmodus der erste Schalter und der zweite Schalter gleichzeitig für einen Zeitabschnitt ausgeschaltet werden, der länger ist als die Dauer eines vorangehenden Schaltzyklus des ersten Schalters und des zweiten Schalters.

Abhängig von einem Schwellenwertvergleich einer neuen einzustellenden Helligkeit kann ein Wechsel des Betriebsmodus zwischen dem ersten Betriebsmodus und dem zweiten Betriebsmodus durchgeführt werden.

Ausgestaltungen des Verfahrens nach vorteilhaften oder bevorzugten Ausführungsbeispielen sowie die damit jeweils erzielten Wirkungen entsprechen den unter Bezugnahme auf die Vorrichtungen beschriebenen Ausgestaltungen.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einem LED-Konverter nach einem Ausführungsbeispiel.
FIG. 2 zeigt ein Schaltbild eines Wandlers nach einem Ausführungsbeispiel.
FIG. 3 zeigt ein vereinfachtes Schaltbild des Wandlers zur Erläuterung der Funktionsweise.
FIG. 4 illustriert Steuersignale zur Halbbrückenansteuerung, die eine Steuereinrichtung des Wandlers nach einem Ausführungsbeispiel in einem ersten Betriebsmodus erzeugt.
FIG. 5 illustriert Steuersignale zur Halbbrückenansteuerung, die die Steuereinrichtung des Wandlers nach einem Ausführungsbeispiel in dem ersten Betriebsmodus erzeugt.
FIG. 6 illustriert die Funktionsweise der Steuereinrichtung des LLC-Resonanzwandlers in dem ersten Betriebsmodus.
FIG. 7 illustriert ein Signal zur Pulsweitenmodulation und korrespondierende Steuersignale zur Halbbrückenansteuerung, die die Steuereinrichtung des Wandlers nach einem Ausführungsbeispiel in dem zweiten Betriebsmodus erzeugt.
FIG. 8 illustriert ein pulsweitenmoduliertes Ausgangssignal des LLC-Resonanzwandlers in dem zweiten Betriebsmodus.
FIG. 9 illustriert die Funktionsweise der Steuereinrichtung des LLC-Resonanzwandlers in dem ersten Betriebsmodus.
FIG. 10 zeigt schematisch die Einstellung neuer Helligkeiten zur weiteren Erläuterung der Funktionsweise der Steuereinrichtung des LLC-Resonanzwandlers.
FIG. 11 ist eine Blockdiagrammdarstellung der Steuereinrichtung des LLC-Resonanzwandlers nach einem Ausführungsbeispiel.
FIG. 12 ist ein Flussdiagramm eines Verfahrens nach einem Ausführungsbeispiel.

Die Merkmale der verschiedenen nachfolgend beschriebenen Ausführungsbeispiele können miteinander kombiniert werden, sofern dies in der nachfolgenden Beschreibung nicht ausdrücklich ausgeschlossen ist.

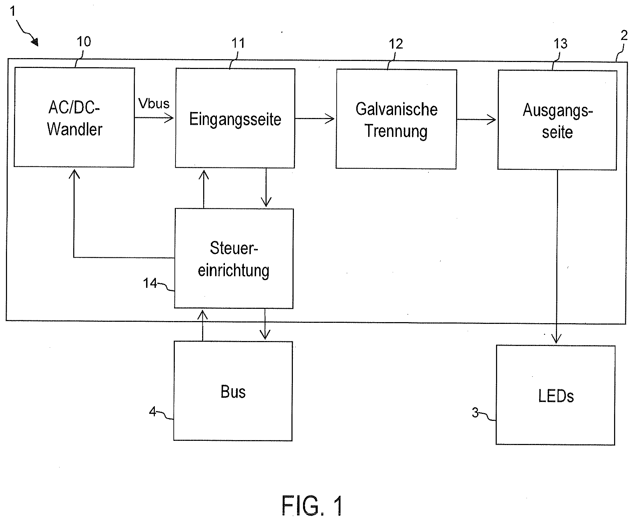

FIG. 1 zeigt ein Beleuchtungssystem 1, bei dem ein Betriebsgerät 2 nach einem Ausführungsbeispiel LEDs 3 mit Energie versorgt. Das Betriebsgerät 2 kann als LED-Konverter ausgestaltet sein. Der LED-Konverter 2 kann als Konstantstromquelle ausgebildet sein. Der LED-Konverter 2 kann so ausgestaltet sein, dass die Helligkeit der LEDs 3 über Befehle, die beispielsweise über einen Bus 4 oder drahtlos übertragen werden, einstellbar ist. Der LED-Konverter 2 kann eine entsprechende Schnittstelle zur Kommunikation mit einem zentralen Steuergerät umfassen und eingerichtet sein, um über die Schnittstelle Dimmbefehle zu empfangen. Andere Eingangssignale können verwendet werden, um eine Helligkeitssteuerung zu realisieren. Beispielsweise kann der LED-Konverter von einem Lichtsensor einen Ist-Wert einer Beleuchtungsstärke empfangen, aus diesem eine neue Helligkeit der LEDs 3 ermitteln und dann die LEDs so auf eine neue Soll-Helligkeit steuern, dass sich die Beleuchtungsstärke einem Sollwert nähert.

Der LED-Konverter 2 kann als SELV-Gerät ausgestaltet sein, bei dem eine primärseitige Schaltung (beispielsweise eine nicht-SELV-Seite) und eine sekundärseitige Schaltung (beispielsweise eine SELV-Seite) galvanisch getrennt sind. Der LED-Konverter 2 kann einen AC/DC-Wandler 10 umfassen. Der AC/DC-Wandler 10 kann eingerichtet sein, um eingangsseitig mit einer Netzspannung gekoppelt zu werden. Der AC/DC-Wandler 10 kann als so genannte Glättungsschaltung oder Schaltung zur Leistungsfaktorkorrektur (PFC) ausgestaltet sein. Der AC/DC-Wandler 10 stellt eine Busspannung Vbus an einen Wandler bereit, der eine eingangs- bzw. primärseitige Schaltung 11 und eine davon galvanisch getrennte ausgangs- bzw. sekundärseitige Schaltung 13 aufweist. Eine galvanische Trennung wird durch einen Transformator 12 oder anderen Umsetzer erreicht.

Der LED-Konverter 2 ist so ausgestaltet, dass der LED-Konverter 2 in wenigstens einem ersten Betriebsmodus und einem zweiten Betriebsmodus zur Helligkeitssteuerung arbeiten kann. In dem ersten Betriebsmodus ändert die Steuereinrichtung 14 zur Helligkeitssteuerung die Schaltfrequenz, mit der Schalter einer Halbbrückenschaltung in der primärseitigen Schaltung 11 geschaltet werden. Auf diese Weise kann die Verstärkung des Verstärkers angepasst werden. Ausgangsseitig ändert sich beispielsweise der von dem LED-Konverter gelieferte Strom bzw. die Leistung gemäß der Änderung der Schaltfrequenz, die die Verstärkung des Wandlers beeinflusst. In dem zweiten Betriebsmodus schaltet die Steuereinrichtung 14 zur Helligkeitssteuerung beide Schalter der Halbbrücke während eines bestimmten Zeitabschnitts in den Aus-Zustand. Die Länge dieses Zeitabschnitts kann gemäß der gewünschten Helligkeit eingestellt werden. Dadurch wird ein gepulstes Ausgangssignal am Ausgang des LED-Konverters erzeugt. Durch Einstellung der Zeitdauern, in denen der LLC-Resonanzkonverter betrieben wird bzw. ausgeschaltet ist, kann der Effektivwert des Ausgangssignals geändert werden. Es wird eine Pulsweitenmodulation realisiert, bei der primärseitig der Zeitraum bzw. die Pulsweite eingestellt werden kann, in dem das Ausgangssignal, das den LEDs 3 zugeführt wird, einen endlichen Wert aufweist.

Wie in FIG. 1 schematisch dargestellt ist, kann bei dem LED-Konverter 2 die Steuereinrichtung 14 unterschiedliche Arten der Helligkeitssteuerung steuern, wobei sie jeweils auf die Schalter der Halbbrücke einwirkt, um die Helligkeit anzupassen. Es ist nicht unbedingt erforderlich, auf der Sekundärseite 13 Schalter für eine Helligkeitssteuerung vorzusehen. Es ist auch nicht unbedingt erforderlich, primärseitig einen zusätzlichen Chip oder zusätzliche Leistungsschalter vorzusehen. Die Steuereinrichtung 14, die durch Steuerung der Halbbrücke ein Amplitudendimmen realisiert, kann durch Steuerung derselben Schalter im zweiten Betriebsmodus auch die Erzeugung eines pulsweitenmodulierten Ausgangssignals bewirken.

Falls die LEDs 3 oder ein anderes Leuchtmittel nicht für Amplitudendimmen eingerichtet sind, kann zur Helligkeitssteuerung der LED-Konverter 2 nur in dem zweiten Betriebsmodus betrieben werden, in dem eine Helligkeitssteuerung unter Verwendung von Pulsweitenmodulation realisiert wird. Falls die LEDs 3 Amplitudendimmen erlauben, kann zur Helligkeitssteuerung der LED-Konverter 2 selektiv im ersten oder im zweiten Betriebsmodus betrieben werden. Ein Umschalten zwischen dem ersten und zweiten Betriebsmodus kann selektiv abhängig von einem Schwellenwertvergleich einer Helligkeit, die eingestellt werden soll, durchgeführt werden.

Bei dem LED-Konverter 2 kann die Steuereinrichtung 14 weitere Funktionen erfüllen. Die Steuereinrichtung 14 kann automatisch eine Fehlererkennung durchführen, um einen offenen Ausgang und/oder einen Kurzschluss zu erkennen. Die Steuereinrichtung 14 kann eine entsprechende Sicherheitsabschaltung einleiten, wenn ein offener Ausgang oder ein Kurzschluss erkannt wird. Die Steuereinrichtung 14 kann alternativ oder zusätzlich andere Funktionen ausführen, beispielsweise einen Überstromschutz, bei dem durch Änderung der Taktung der Schalter der Halbbrücke der primärseitige und/oder ausgangsseitige Strom verringert wird. Die Steuereinrichtung 14 kann auch herkömmliche Funktionen der Steuerung eines LED-Konverters ausführen, wie die Umsetzung von Befehlen, die über einen Bus 4 oder über eine Drahtlosschnittstelle empfangen werden.

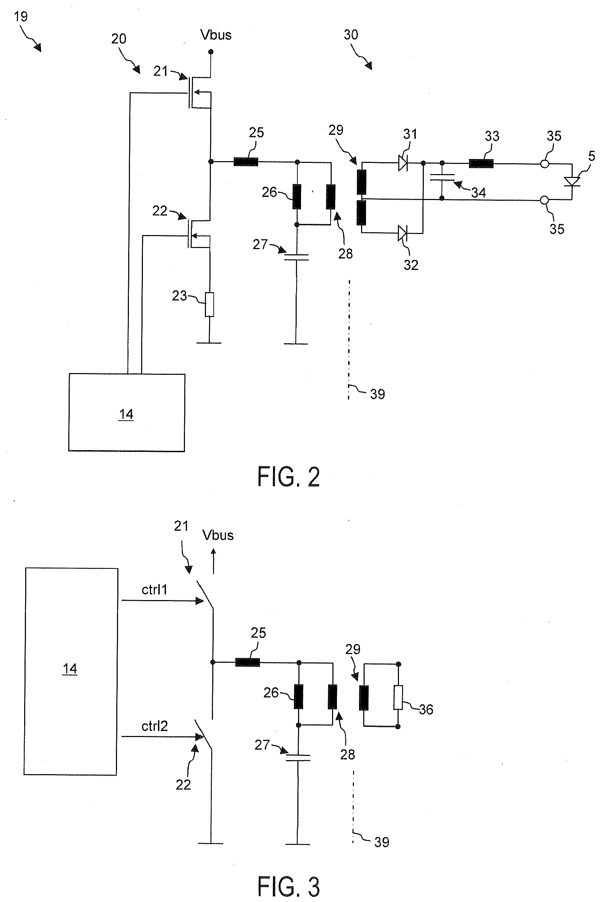

Die Funktionsweise und der Aufbau von Wandlern nach Ausführungsbeispielen werden unter Bezugnahme auf FIG. 2-12 näher beschrieben.

FIG. 2 ist ein Schaltbild eines Wandlers 19 nach einem Ausführungsbeispiel. Der Wandler 19 umfasst eine primärseitige Schaltung 20 und eine Sekundärseite 30. Es liegt Potentialtrennung zwischen der primärseitigen Schaltung 20 und der Sekundärseite 30 vor. Zur Trennung kann ein Transformator mit einer Primärspule 28 und einer Sekundärspule 29 vorgesehen sein. Der Wandler 19 kann bei dem LED-Konverter 2 oder bei einem anderen Betriebsgerät zum Betreiben von LEDs verwendet werden, um die Funktionen der in FIG. 1 dargestellten primärseitigen Schaltung 11, der galvanischen Trennung 12 und der Sekundärseite 13 zu erfüllen. Der Wandler 19 wirkt als DC/DC-Wandler. Die Sekundärseite 30 kann ein SELV-Bereich sein, der durch eine SELV-Barriere 39 vom primärseitigen Bereich getrennt ist. Die primärseitige Schaltung 20 kann alle Komponenten beinhalten, die nicht zum SELV-Bereich gehören.

Die primärseitige Schaltung 20 umfasst einen LLC-Resonanzkreis, der als Serienresonanzkreis ausgestaltet ist. Der LLC-Resonanzkreis weist eine erste Induktivität 25, eine zweite Induktivität 26 und eine Kapazität 27 in einer Serienschaltung auf. Gemäß der allgemeinen Terminologie in diesem technischen Gebiet wird der Begriff "LLC-Resonanzkreis" bzw. "LLC-Resonanzwandler" so verwendet, dass damit ein Resonanzkreis mit zwei Induktivitäten und einer Kapazität bzw. ein entsprechender Wandler bezeichnet wird, wobei es nicht darauf ankommt, ob die Induktivität 26 zwischen die Induktivität 25 und den Kondensator 27 geschaltet ist oder der Kondensator 27 zwischen die induktiven Elemente 25 und 26 geschaltet ist. Die zweite Induktivität 26 ist symbolisch dargestellt und kann die Hauptinduktivität der Primärspule 28 des Transformators sein. Alternativ oder zusätzlich kann auch die erste Induktivität 25 als Streuinduktivität in den Transformator integriert sein. Das zweite induktive Element 26 kann die Haupt-Induktivität des Resonanzkreises sein, deren Induktivität größer als die erste Induktivität 25 ist. Andere Ausgestaltungen des LLC-Resonanzkreises sind ebenfalls möglich. Beispielsweise kann die Kapazität 27 zwischen die Induktivitäten 25 und 26 geschaltet sein.

Die primärseitige Schaltung 20 umfasst eine Halbbrücke mit einem ersten Schalter 21, der ein Leistungsschalter sein kann, und einem zweiten Schalter 22, der ein Leistungsschalter sein kann. Der erste Schalter 21 und der zweite Schalter 22 können identisch sein, und die Halbbrücke kann als symmetrische Halbbrücke ausgebildet sein. Die Schalter können als Feldeffekttransistoren, beispielsweise als MOSFETs ausgebildet sein. Der Resonanzkreis ist mit einem Knoten zwischen dem ersten Schalter 21 und dem zweiten Schalter 22 verbunden. Der Resonanzkreis ist mit der Mitte der Halbbrücke zwischen den zwei Schaltern 21 und 22 verbunden. Ein erster Anschluss der ersten Induktivität 25 des Resonanzkreises kann mit dem Knoten zwischen dem ersten Schalter 21 und dem zweiten Schalter 22 der Halbbrückenschaltung verbunden sein. Ein zweiter Anschluss der ersten Induktivität 25 kann mit einem ersten Anschluss der zweiten Induktivität 26 des Resonanzkreises verbunden sein. Ein zweiter Anschluss der zweiten Induktivität 26 des Resonanzkreises kann mit einem ersten Anschluss der Kapazität 27 verbunden sein. Ein Shunt-Widerstand 23 kann zwischen den zweiten Schalter 22 und ein Referenzpotential, beispielsweise Masse, geschaltet sein, um beispielsweise Abschaltzeiten im Fall einer Fehlerabschaltung ausreichend kurz zu halten.

Im Betrieb des Wandlers 19 steuert die Steuereinrichtung 14 den ersten Schalter 21 und den zweiten Schalter 22. Dabei kann jeder der Schalter jeweils mit derselben Schaltfrequenz geschaltet werden. Die Steuereinrichtung 14 steuert den ersten Schalter 21 und den zweiten Schalter 22 so, dass immer maximal einer der beiden Schalter leitend geschaltet ist. Zur Einstellung der Helligkeit kann die Steuereinrichtung 14 einen ersten Betriebsmodus und einen zweiten Betriebsmodus aufweisen.

In dem ersten Betriebsmodus wird das wechselseitig getaktete Schalten des ersten Schalters 21 und des zweiten Schalters 22 kontinuierlich fortgesetzt. Die Totzeiten, in denen beide Schalter vorübergehend im Aus-Zustand sind, sind kleiner als die Dauer eines Schaltzyklus. Zum Einstellen der Helligkeit wird die Schaltfrequenz geändert, mit der der erste Schalter 21 und der zweite Schalter 22 getaktet geschaltet werden.

In dem zweiten Betriebsmodus wird das wechselseitig getaktete Schalten des ersten Schalters 21 und des zweiten Schalters 22 jeweils für einen Zeitraum unterbrochen, der länger als ein Schaltzyklus ist und/oder der länger als eine Periode der Eigenschwingung des LLC-Resonanzkreises ist. Es werden während eines ersten Zeitabschnitts wieder mehrere Schaltzyklen beider Schalter durchgeführt, bevor in einem anschließenden zweiten Zeitabschnitt beide Schalter im Aus-Zustand bleiben. Während des zweiten Zeitabschnitts kann das Ausgangssignal, d.h. die Ausgangsspannung bzw. der Ausgangsstrom des LLC-Resonanzwandlers, auf einen Nullwert abfallen. Zum Einstellen der Helligkeit kann die Dauer des ersten Zeitabschnitts, in dem die Schalter getaktet geschaltet werden, und/oder die Dauer des zweiten Zeitabschnitts, in dem beide Schalter im Aus-Zustand bleiben, geändert werden.

Die Steuereinrichtung 14 kann ein Chip (integrierter Schaltkreis), insbesondere ein ASIC, sein, der die entsprechende Steuerung der Schalter der Halbbrücke sowohl im ersten Betriebsmodus als auch im zweiten Betriebsmodus zur Helligkeitssteuerung durchführt. Darüber hinaus kann die Steuereinrichtung 14 auch automatisch festlegen, ob der erste Betriebsmodus oder der zweite Betriebsmodus gewählt werden soll. Die Steuereinrichtung 14 kann automatisch zwischen dem ersten und dem zweiten Betriebsmodus wechseln, falls das zu versorgende Leuchtmittel Amplitudendimmen erlaubt. Falls das zu versorgende Leuchtmittel kein Amplitudendimmen erlaubt oder aus anderen Gründen die Helligkeit nur mit Pulsweitenmodulation eingestellt werden soll, kann die Steuereinrichtung 14 die Helligkeitssteuerung nur gemäß dem zweiten Betriebsmodus vornehmen. Um einen Betrieb nur im zweiten Betriebsmodus zu erzwingen, kann die Steuereinrichtung 14 beispielsweise einen Eingang aufweisen, an den ein Signal angelegt werden kann, das anzeigt, dass nur Dimmen durch Pulsweitenmodulation durchzuführen ist. Alternativ oder zusätzlich kann die Steuereinrichtung 14 über eine Schnittstelle des LED-Konverters 2 Informationen darüber erhalten, ob Dimmen auch durch Amplitudenmodulation oder nur durch Pulsweitenmodulation durchgeführt werden soll. Entsprechende Informationen können beispielsweise über den Bus 4 oder eine andere Schnittstelle zur Datenkommunikation übertragen werden. Alternativ oder zusätzlich kann die Steuereinrichtung 14 eine automatische Erkennung von Eigenschaften des Leuchtmittels durchführen, um zu ermitteln, ob Dimmen auch durch Amplitudenmodulation oder nur durch Pulsweitenmodulation durchgeführt werden soll.

FIG. 3 zeigt schematisch ein vereinfachtes Schaltbild des Wandlers 19. Die ausgangsseitig mit der Sekundärspule 29 verbundenen Komponenten sind schematisch nur durch einen Ersatzwiderstand 36 dargestellt.

Die Steuereinrichtung 14 erzeugt ein erstes Steuersignal ctrl1 zum Steuern des ersten Schalters 21. Das erste Steuersignal ctrl1 kann beispielsweise die Gatespannung zum Schalten des FETs sein, der den ersten Schalter 21 vildet. Die Steuereinrichtung 14 erzeugt ein zweites Steuersignal ctrl2 zum Steuern des zweiten Schalters 22. Das zweite Steuersignal ctrl2 kann beispielsweise die Gatespannung zum Schalten des weiteren FETs sein, der den zweiten Schalter 22 bildet. Im zweiten Betriebsmodus werden für bestimmte Zeitintervalle beide Steuersignale ctrl1, ctrl2 so gesetzt, dass beide Schalter 21, 22 im Aus-Zustand bleiben. Auf diese Weise wird ein gepulstes Ausgangssignal erzeugt, das die eine Pulsweitenmodulation erlaubt.

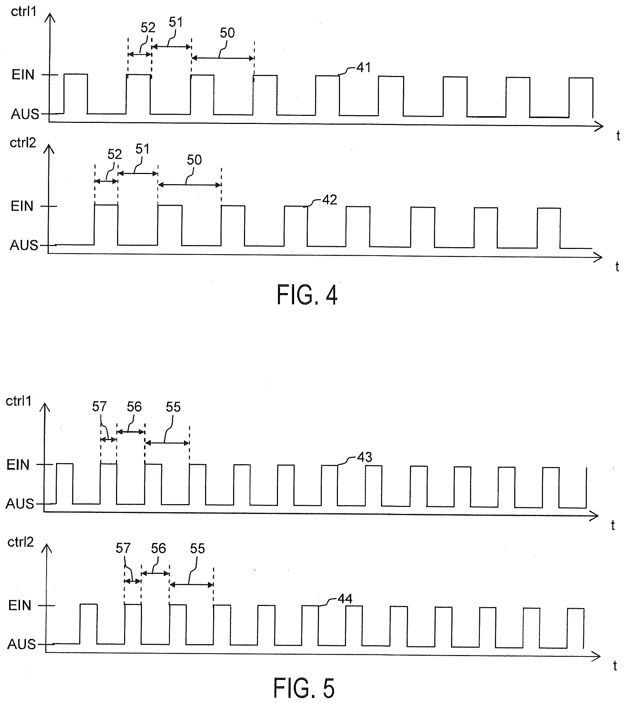

Unter Bezugnahme auf FIG. 4-6 wird die Funktionsweise im ersten Betriebsmodus weiter beschrieben.

FIG. 4 zeigt schematisch das von der Steuereinrichtung 14 an den ersten Schalter 21 ausgegebene Steuersignal 41 und das an den zweiten Schalter 22 ausgegebene Steuersignal 42, mit dem der entsprechende Schalter geschaltet wird. Beide Schalter werden periodisch mit derselben Schaltfrequenz geschaltet, wobei die Schalter wechselseitig getaktet sind. Das Steuersignal kann beispielsweise einer Gatespannung entsprechen, die an die Gateelektrode der Schalter angelegt wird.

Eine Schaltzyklusdauer 50 des Steuersignals 41 für den ersten Schalter 21 und eine Schaltzyklusdauer 50 des Steuersignals 42 für den zweiten Schalter 22, die jeweils als Zeit zwischen aufeinanderfolgenden steigenden Flanken des Steuersignals definiert sein kann, ist für beide Schalter gleich. Diese Schaltzyklusdauer 50 entspricht der Dauer eines Schaltzyklus des ersten Schalters 21 und zweiten Schalters 22. Die Schalter 21 und 22 werden so wechselseitig getaktet geschaltet, dass immer nur maximal einer der Schalter leitend geschaltet ist. Eine Totzeit zwischen dem Ausschalten eines Schalters und dem Einschalten des anderen Schalters kann klein sein im Vergleich zum Inversen der Schaltfrequenz, d.h. klein im Vergleich zu der Schaltzyklusdauer 50 eines Schaltzyklus. Entsprechend kann die Dauer 51, während der die Schalter in jedem Schaltzyklus im Aus-Zustand sind, geringfügig größer sein als die Zeitdauer 52, während der die Schalter in jedem Schaltzyklus im Ein-Zustand sind.

Das Inverse der Schaltzyklusdauer 50 ist die Schaltfrequenz. Die Schaltfrequenz kann so gewählt sein, dass sie beispielsweise größer als die Eigenfrequenz des LLC-Resonanzkreises ist. Die Schaltfrequenz kann verändert werden, um die Helligkeit des Leuchtmittels einzustellen.

Im ersten Betriebsmodus erfolgt eine Einstellung der Helligkeit dadurch, dass die Schaltfrequenz geändert wird. So lange der erste Betriebsmodus aktiv ist und das Leuchtmittel mit Energie versorgt wird, erfolgt ein kontinuierliches Schalten beider Schalter 21, 22 ohne längere Unterbrechungen, wie sie im zweiten Betriebsmodus realisiert werden.

FIG. 5 veranschaulicht das von der Steuereinrichtung 14 an den ersten Schalter 21 ausgegebene Steuersignal 43 und das an den zweiten Schalter 22 ausgegebene Steuersignal 44, mit dem der entsprechende Schalter geschaltet wird, nachdem die Schaltfrequenz geändert wurde. Beide Schalter werden periodisch mit derselben Schaltfrequenz geschaltet, wobei die Schalter wechselseitig getaktet sind. Die Schaltfrequenz wurde auf einen höheren Wert geändert.

Eine Schaltzyklusdauer 55 des Steuersignals 43 für den ersten Schalter 21 und eine Schaltzyklusdauer 55 des Steuersignals 44 für den zweiten Schalter 22, die jeweils als Zeit zwischen aufeinanderfolgenden steigenden Flanken des Steuersignals definiert sein kann, ist für beide Schalter gleich. Diese Schaltzyklusdauer 55 entspricht der Dauer eines Schaltzyklus und ist gleich dem Inversen der neuen Schaltfrequenz. So lange der erste Betriebsmodus aktiv ist und das Leuchtmittel mit Energie versorgt wird, erfolgt ein kontinuierliches Schalten beider Schalter 21, 22 ohne längere Unterbrechungen, wie sie im zweiten Betriebsmodus realisiert werden. Die Zeitdauer 56, während der die Schalter in jedem Schaltzyklus bei der neuen Schaltfrequenz im Aus-Zustand sind, kann geringfügig größer sein als die Zeitdauer 57, während der die Schalter in jedem Schaltzyklus im Ein-Zustand sind.

Wird im Betrieb die Taktung der Schalter 21, 22 zum Einstellen der Helligkeit verändert, kann dies auf verschiedene Weisen geschehen. Bei einer Ausgestaltung kann die Schaltzyklusdauer 50 bzw. 55 des Schaltzyklus gemäß der neuen Schaltfrequenz geändert werden, wobei das Verhältnis zwischen der Zeitdauer 57, während der die Schalter in jedem Schaltzyklus im Ein-Zustand sind, und der Zeitdauer 56, während der die Schalter in jedem Schaltzyklus im Aus-Zustand sind, konstant gehalten wird. In diesem Fall werden die Zeitdauer 57, während der die Schalter in jedem Schaltzyklus im Ein-Zustand sind, und die Zeitdauer 56, während der die Schalter in jedem Schaltzyklus im Aus-Zustand sind, für jeden der Schalter gemäß der Änderung der Schaltfrequenz verlängert oder verkürzt, abhängig davon, ob die Frequenz erniedrigt oder erhöht wird. Bei einer weiteren Ausgestaltung kann die Zeitdauer 52 bzw. 57, während der die Schalter in jedem Schaltzyklus im Ein-Zustand sind, konstant gehalten werden, während die Schaltzyklusdauer 50 bzw. 55 des Schaltzyklus gemäß der neuen Schaltfrequenz geändert wird. In diesem Fall verkürzt sich bei einer Erhöhung der Schaltfrequenz die Zeitdauer 51 bzw. 55, während der die Schalter in jedem Schaltzyklus bei der neuen Schaltfrequenz im Aus-Zustand sind, entsprechend, wobei immer sichergestellt bleibt, dass nie beide Schalter gleichzeitig leitend geschaltet sind.

Die Frequenz, mit der die Schalter 21, 22 geschaltet werden, kann abhängig von den Eigenschaften des LLC-Serienresonanzkreises, insbesondere abhängig von der Eigenfrequenz des LLC-Serienresonanzkreises, und abhängig von einer gewünschten Helligkeit gewählt sein. Durch Änderung der Schaltfrequenz relativ zur Eigenfrequenz des LLC-Serienresonanzkreises kann ein Dimmen realisiert werden.

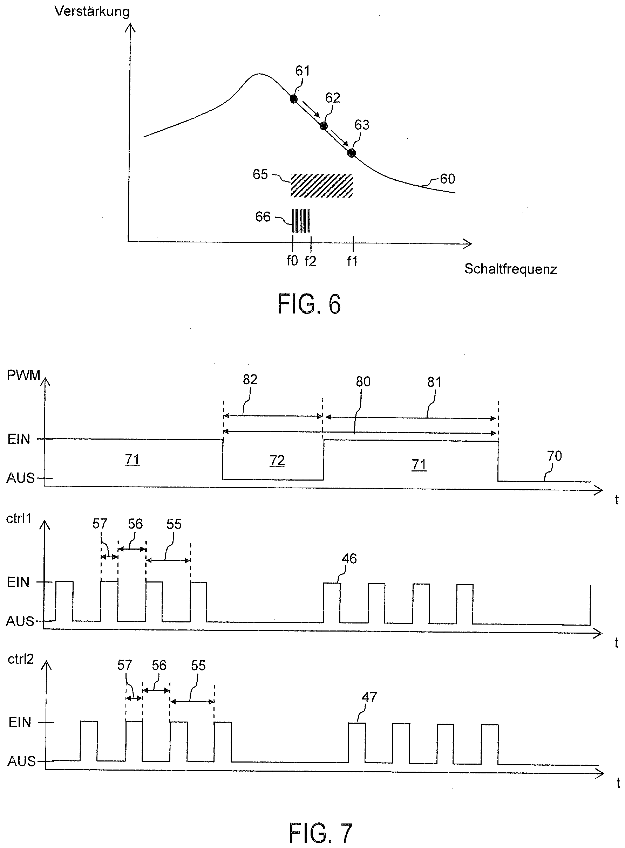

FIG. 6 zeigt einen charakteristischen Verlauf der frequenzabhängigen Übertragungsfunktion bzw. frequenzabhängigen Verstärkung 60 des LLC-Resonanzwandlers. Ein ähnliches Verhalten besteht für einen weiten Bereich von versorgten Lasten.

Im ersten Betriebsmodus kann die Schaltfrequenz der Schalter der Halbbrückenschaltung aus einem Frequenzintervall 65 gewählt werden. Die Schaltfrequenz wird von der Steuereinrichtung 14 automatisch abhängig von der gewünschten Helligkeit ermittelt. Durch Erhöhung der Schaltfrequenz von einer Frequenz f0 zu höheren Frequenzen wird der Betriebspunkt des LLC-Resonanzwandlers auf der Kurve 60 vom Betriebspunkt 61 zu Betriebspunkten 62 oder 63 verschoben, bei denen die Verstärkung des LLC-Resonanzwandlers kleiner ist. Entsprechend kann durch Änderung der Schaltfrequenz im ersten Betriebsmodus ein Dimmen realisiert werden.

Unter Bezugnahme auf FIG. 7-9 wird die Funktionsweise im zweiten Betriebsmodus weiter beschrieben.

Im zweiten Betriebsmodus steuert die Steuereinrichtung 14 die Halbbrücke so, dass jeweils ein erster Zeitabschnitt, in dem die Schalter 21, 22 der Halbbrücke getaktet geschaltet werden, von einem zweiten Zeitabschnitt gefolgt wird, in dem die Schalter 21, 22 der Halbbrücke beide im Aus-Zustand bleiben. Dadurch wird ein gepulster Betrieb des LLC-Resonanzwandlers erreicht. Durch Einstellung der relativen Dauern der Zeitabschnitte wird die effektive Helligkeit eingestellt.

FIG. 7 illustriert den gepulsten Betrieb. In einem ersten Zeitabschnitt 71 werden Steuersignale ctrl1 und ctrl2 für den ersten Schalter 21 und den zweiten Schalter 22 erzeugt, um diese getaktet zu schalten. Im darauffolgenden zweiten Zeitabschnitt 72 sind die Steuersignale ctrl1 und ctrl2 auf Werte gesetzt, die einem Aus-Zustand der Schalter entsprechen. Im darauffolgenden ersten Zeitabschnitt 71 werden Steuersignale ctrl1 und ctrl2 für den ersten Schalter 21 und den zweiten Schalter 22 erzeugt, um diese getaktet zu schalten. Dies wird entsprechend fortgesetzt, so lange die Helligkeitssteuerung im zweiten Betriebsmodus erfolgt. Bei einer Änderung der Helligkeit kann die Länge des ersten Zeitabschnitts und/oder des zweiten Zeitabschnitts angepasst werden, oder es kann ein Übergang zum ersten Betriebsmodus erfolgen.

Der erste Zeitabschnitt 71 weist jeweils eine Zeitdauer 81 auf. Der zweite Zeitabschnitt 72 weist jeweils eine Zeitdauer 82 auf. Die Summe dieser Zeitdauern entspricht der Periode 80 des gepulsten Betriebs. Es liegt eine Separation von Zeitskalen derart vor, dass die Periode 80 des gepulsten Betriebs länger, insbesondere viel länger als die Schaltzyklusdauer 55 eines Schaltzyklus ist, mit dem die Schalter 21, 22 durch die Steuersignale 46, 47 in den ersten Zeitabschnitten jeweils getaktet geschaltet werden. Beispielsweise kann die Schaltfrequenz, die dem Inversen der Dauer 55 des Schaltzyklus entspricht, mehrere 10 kHz oder sogar einige oder mehrere 100 kHz betragen. Die Frequenz des gepulsten Signals, die dem Inversen der Periode 80 des gepulsten Betriebs entspricht, kann einige hundert Hz, beispielsweise 500 Hz betragen. Die Periode 80 und insbesondere die Dauer 82 des zweiten Zeitabschnitts 72, in dem beide Schalter in den Aus-Zustand geschaltet bleiben, kann so gewählt sein, dass sie aufgrund der Trägheit des menschlichen Auges für das menschliche Auge nicht wahrnehmbar ist.

Die Zeitdauer 81 des ersten Zeitabschnitts 71, in dem die Schalter 21, 22 getaktet geschaltet werden, kann ein geradzahliges Vielfaches der Schaltzyklusdauer 55 eines Schaltzyklus sein. Ähnlich kann die Zeitdauer 82 des zweiten Zeitabschnitts 72, in dem die Schalter 21, 22 im Aus-Zustand bleiben, ein geradzahliges Vielfaches der Schaltzyklusdauer 55 des Schaltzyklus sein, der im vorangegangenen ersten Zeitabschnitt 71 zum Schalten verwendet wurde.

Im zweiten Betriebsmodus kann über die Dauer 82 des zweiten Zeitabschnitts, in dem die Energieübertragung durch den LLC-Resonanzwandler im Wesentlichen ausgeschaltet wird, eine Helligkeitssteuerung erfolgen. Die Schaltfrequenz, mit der die Schalter 21, 22 der Halbbrücke im ersten Zeitabschnitt 71 geschaltet werden, kann deshalb im Hinblick auf weitere Kriterien gewählt werden, beispielsweise derart, dass Verluste im LLC-Resonanzwandler kleiner als ein Schwellenwert gehalten werden.

Unter erneuter Bezugnahme auf FIG. 6 ist schematisch ein zweites Frequenzintervall 66 dargestellt, aus dem die Schaltfrequenz im zweiten Betriebsmodus ausgewählt werden kann. Im zweiten Betriebsmodus kann eine Schaltfrequenz gewählt werden, bei der die Verluste im LLC-Resonanzwandler kleiner sind als beim Schalten mit der maximalen Schaltfrequenz f1 im ersten Betriebsmodus. Die maximale wählbare Schaltfrequenz f2 im zweiten Betriebsmodus kann kleiner sein als die maximale wählbare Schaltfrequenz f1 im ersten Betriebsmodus. Im zweiten Betriebsmodus kann das Schalten in den ersten Zeitabschnitten 71 auch mit einer fix vorgegebenen Schaltfrequenz erfolgen, das Intervall 66 also auf eine einzige Frequenz kollabiert sein.

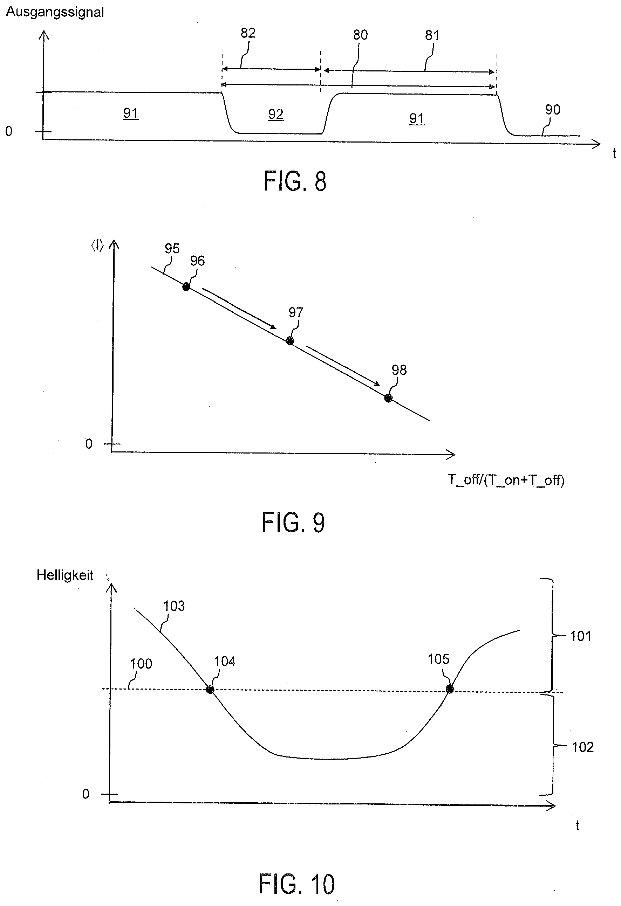

FIG. 8 illustriert das Ausgangssignal des LLC-Resonanzwandlers bei Betrieb im zweiten Betriebsmodus. Erste Zeitabschnitte 91 mit endlicher Ausgangsleistung und zweite Zeitabschnitte 92 mit bis auf Null abfallender Ausgangsleistung können im Ausgangssignal alternieren. Die Zeitdauern der Abschnitte werden durch den gepulsten Betrieb der Halbbrücke kontrolliert.

Das vorübergehende Ausschalten des Leuchtmittels in den zweiten Zeitabschnitten 92 ist für das menschliche Auge nicht detektierbar. Durch Einstellung der relativen Länge der ersten Zeitdauer 81, in der eine Lichtabgabe erfolgt, und der zweiten Zeitdauer 82, in der keine Lichtabgabe erfolgt, kann die effektive, zeitlich gemittelte Helligkeit eingestellt werden.

FIG. 9 illustriert die Steuerung des effektiven, zeitlich gemittelten Ausgangssignals als Funktion der Zeitdauer 82, in der die Halbbrücke ausgeschaltet ist ("T_off"), und der Zeitdauer 81, in der die Halbbrücke getaktet betrieben wird ("T_on"). Durch Änderung der Zeitdauer T_off bei konstanter Periodendauer 80 des gepulsten Betriebs kann das zeitlich gemittelte Ausgangssignal, beispielsweise der zeitlich gemittelte Ausgangsstrom, eingestellt werden. Zur Einstellung der Helligkeit können beispielsweise verschiedene Betriebspunkte 96-98 auf der Kurve 96 angefahren werden, um das effektive Ausgangssignal und somit die Helligkeit zu steuern.

Bei Verwendung des LLC-Resonanzwandlers bzw. des LED-Konverters zum Betreiben eines Leuchtmittels, das auch Amplitudendimmen erlaubt, kann abhängig von der gewünschten Helligkeit entweder der erste Betriebsmodus oder der zweite Betriebsmodus gewählt werden. Es kann ein Schwellenwertvergleich vorgenommen werden, der einen Wechsel zwischen dem ersten und dem zweiten Betriebsmodus auslöst.

FIG. 10 ist eine beispielhafte Darstellung einer Helligkeit 103 des Leuchtmittels, die zeitabhängig auf neue Werte eingestellt wird. Eine derartige Änderung kann beispielsweise als Antwort auf Dimmbefehle resultieren, die benutzerdefiniert oder automatisch, beispielsweise zur Beleuchtungsstärkenregelung, erzeugt werden.

Die Steuereinrichtung 14 wählt automatisch einen Betriebsmodus zur Helligkeitssteuerung. Weist die Helligkeit, die beispielsweise im Dimmbefehl angegeben sein kann, einen Wert in einem ersten Wertebereich 101 auf, wird der erste Betriebsmodus aktiviert. Die Helligkeitssteuerung erfolgt durch Amplitudendimmen. Weist die Helligkeit, die beispielsweise im Dimmbefehl angegeben sein kann, einen Wert in einem zweiten Wertebereich 102 auf, wird der zweite Betriebsmodus aktiviert. Die Helligkeitssteuerung erfolgt durch Pulsweitenmodulation.

Wenn anfangs der erste Betriebsmodus gewählt ist und die Helligkeit anschließend erniedrigt wird, kann die Steuereinrichtung 14 automatisch einen Übergang in den zweiten Betriebsmodus vornehmen, wenn die Soll-Helligkeit einen Schwellenwert 100 erreicht und dieser Schwellenwert unterschritten werden soll. Beim Punkt 104 wechselt der Betrieb vom ersten Betriebsmodus zum zweiten Betriebsmodus. Ähnlich kann die Steuereinrichtung 14 automatisch einen Übergang von dem zweiten Betriebsmodus in den ersten Betriebsmodus vornehmen, wenn der Schwellenwert 100 ausgehend von niedrigerer Helligkeit erreicht ist und überschritten werden soll. Beim Punkt 105 wechselt der Betrieb vom zweiten Betriebsmodus zum ersten Betriebsmodus.

Beim Wechsel zwischen erstem und zweitem Betriebsmodus kann die Schaltfrequenz zum getakteten Schalten der Schalter der Halbbrücke sprunghaft geändert werden. Wie erläutert kann im zweiten Betriebsmodus die Schaltfrequenz, mit der in den ersten Zeitabschnitten 71 die Schalter getaktet geschaltet werden, aus einem Frequenzintervall 66 gewählt werden, das kleiner ist als ein Frequenzintervall 65, aus dem im ersten Betriebsmodus Schaltfrequenzen wählbar sind. Bei einem Übergang vom ersten Betriebsmodus zum zweiten Betriebsmodus kann die Schaltfrequenz verringert werden, obwohl die Helligkeit aufgrund der Pulsweitenmodulation dabei weiter abnimmt. Bei einem Übergang vom zweiten Betriebsmodus zum ersten Betriebsmodus kann die Schaltfrequenz erhöht werden, obwohl die Helligkeit aufgrund des Endes der Pulsweitenmodulation dabei weiter zunimmt.

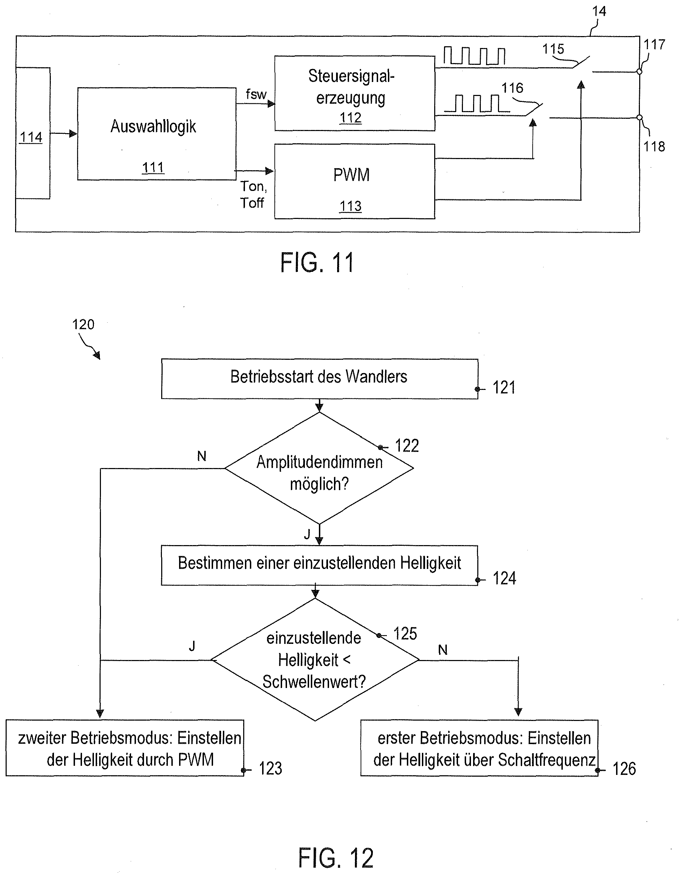

FIG. 11 zeigt eine Blockdiagrammdarstellung einer Steuereinrichtung 14, die bei LLC-Resonanzwandlern und LED-Konvertern eingesetzt werden kann. Die Steuereinrichtung kann als integrierte Halbleiterschaltung, insbesondere als ASIC ausgeführt sein.

Die Steuereinrichtung 14 weist eine Schnittstelle 114 auf, über die beispielsweise Dimmbefehle oder Ist-Werte eines Lichtsensors empfangen werden können, der für eine Helligkeitssteuerung oder eine Beleuchtungsstärkeregelung verwendet wird.

Die Steuereinrichtung 14 weist einen Abschnitt auf, der eine Auswahllogik 111 implementiert. Die Auswahllogik 111 kann bestimmen, ob der erste Betriebsmodus oder der zweite Betriebsmodus zur Helligkeitssteuerung verwendet werden soll. Ist das Leuchtmittel nicht für ein Amplitudendimmen eingerichtet oder soll Amplitudendimmen aus anderen Gründen nicht durchgeführt werden, kann beispielsweise durch einen entsprechenden Befehl über die Schnittstelle 114 sichergestellt werden, dass die Auswahllogik 111 immer den zweiten Betriebsmodus auswählt. Unterstützt das Leuchtmittel ein Amplitudendimmen, kann die Auswahllogik 111 abhängig von einem Schwellenwertvergleich einer gewünschten Helligkeit automatisch den ersten Betriebsmodus zur Helligkeitssteuerung oder den zweiten Betriebsmodus zur Helligkeitssteuerung wählen.

Die Steuereinrichtung 14 weist einen Abschnitt 112 zur Steuersignalerzeugung auf. Die Auswahllogik 111 kann dem Abschnitt 112 zur Steuersignalerzeugung die Schaltfrequenz vorgeben. Der Abschnitt 112 zur Steuersignalerzeugung kann automatisch einen Zug von Signalen für den ersten Schalter und den zweiten Schalter erzeugen. Diese Signale werden noch mit einer Pulsweitenmodulation kombiniert, beispielsweise über Schalter 115 und 116, falls der zweite Betriebsmodus aktiviert ist.

Die Steuereinrichtung 14 weist einen Abschnitt 113 zur Pulsweitenmodulation auf. Die Auswahllogik 111 kann dem Abschnitt 112 zur Pulsweitenmodulation die Parameter der Pulsweitenmodulation vorgeben, beispielsweise die Zeitdauern T_on und T_off, die bestimmen, wie lange die Halbbrücke jeweils getaktet geschaltet wird und ausgeschaltet wird. Falls der erste Betriebsmodus aktiv ist, schaltet der Abschnitt 113 zur Pulsweitenmodulation die Schalter 115 und 116 immer in den Ein-Zustand. Falls der zweite Betriebsmodus aktiv ist, kann der Abschnitt 113 zur Pulsweitenmodulation ein Pulsweitenmodulationssignal erzeugen, wie es beispielsweise als Signal 70 in FIG. 7 dargestellt ist. Durch das entsprechende Schalten der Schalter 115 und 116 wird das Pulsweitenmodulationssignal mit einer logischen UND-Verknüpfung mit den von dem Abschnitt 112 erzeugten Signalen verknüpft. die resultierenden Steuersignale werden an Ausgängen 117 und 118 zur Steuerung des ersten Schalters 21 bzw. des zweiten Schalters 22 ausgegeben.

FIG. 12 ist ein Flussdiagramm eines Verfahrens 120, das von der Steuereinrichtung 14 zum Steuern eines Wandlers durchgeführt werden kann. Der Wandler kann als Wandler nach einem Ausführungsbeispiel ausgestaltet sein. Der Wandler weist einen LLC-Resonanzkreis mit Halbbrückenansteuerung auf. Der Wandler weist eine primärseitige Schaltung und eine davon galvanisch getrennte Sekundärseite auf. Die primärseitige Schaltung kann beispielsweise ein Nicht-SELV-Bereich des Wandlers sein und die Sekundärseite kann der SELV-Bereich des Wandlers sein.

Bei 121 wird der Betrieb des Wandlers gestartet. Nach dem Betriebsstart wird bei 122 ermittelt, ob das zu versorgende Leuchtmittel Amplitudendimmen erlaubt. Falls kein Amplitudendimmen möglich ist, fährt das Verfahren bei 123 fort und aktiviert den zweiten Betriebsmodus zur Helligkeitssteuerung. Die Heiligkeitssteuerung erfolgt durch Pulsweitenmodulation, wobei die Steuereinrichtung die Schalter der Halbbrücke für bestimmte Zeiträume in den Aus-Zustand schaltet.

Falls bei 122 ermittelt wird, dass Amplitudendimmen möglich ist, wird bei 124 eine einzustellende Helligkeit ermittelt. Der Helligkeitswert kann beispielsweise durch einen Dimmbefehl festgelegt werden oder von der Steuereinrichtung 14 ermittelt werden, beispielsweise bei einer Beleuchtungsregelung.

Bei 125 wird die einzustellende Helligkeit einem Schwellenwertvergleich unterzogen. Abhängig von einem Ergebnis des Vergleichs kann bei 123 die Helligkeitssteuerung im zweiten Betriebsmodus erfolgen, in dem die Helligkeitssteuerung durch Pulsweitenmodulation erfolgt, oder es kann bei 126 die Helligkeitssteuerung im ersten Betriebsmodus erfolgen, in dem die Helligkeitssteuerung durch Änderung der Schaltfrequenz der Halbbrückensteuerung erfolgt.

Falls das Leuchtmittel Amplitudendimmen erlaubt, können die Schritte 124 und 125 wiederholt werden. Dadurch kann abhängig von einer neuen einzustellenden Helligkeit ein Wechsel zwischen dem ersten Betriebsmodus und dem zweiten Betriebsmodus erfolgen.

Während Ausführungsbeispiele unter Bezugnahme auf die Figuren beschrieben wurden, können Abwandlungen bei weiteren Ausführungsbeispielen realisiert werden. Während vor allem ein erster und zweiter Betriebsmodus zur Helligkeitssteuerung beschrieben wurde, in dem die Steuereinrichtung die Schalter der Halbbrücke unterschiedlich steuert, um eine Helligkeitssteuerung zu realisieren, können weitere Betriebsmodi existieren. Beispielsweise kann die Steuereinrichtung des LLC-Resonanzwandlers einen Betriebsmodus zum Überstromschutz und/oder einen Betriebsmodus zur Sicherheitsabschaltung unterstützen.

Anstelle einer Pulsweitenmodulation können im zweiten Betriebsmodus auch andere Arten einer gepulsten Modulation genutzt werden. Allgemein wird im zweiten Betriebsmodus zeitweise Pausen eingefügt, in denen keine Energie übertragen wird. Der Beginn und das Ende einer derartigen Pause kann auch im Sinne eines Zweipunktreglers bestimmt werden, wobei immer die Pause begonnen wird, wenn ein bestimmter Wert überschritten wird, und bei Unterschreiten eines bestimmten Werts wird die Pause beendet. Dabei kann der Zweipunktregler von zwei Messwerten oder auch zeitlichen Werten abhängen.

Die Steuereinrichtung der Wandler und LED-Konverter nach Ausführungsbeispielen kann als integrierte Halbleiterschaltung ausgestaltet sein. Die Steuereinrichtung kann als anwendungsspezifische Spezialschaltung (ASIC, "Application Specific Integrated Circuit") oder als anderer Chip ausgestaltet sein.

Induktivitäten und Kapazitäten können jeweils durch entsprechende induktive bzw. kapazitive Elemente, beispielsweise als Spulen bzw. Kondensatoren, gebildet werden. Es ist jedoch auch möglich, dass kleinere Induktivitäten, beispielsweise eine Induktivität des LLC-Resonanzkreises oder beide Induktivitäten des LLC-Resonanzkreises, als Streuinduktivität ausgebildet sind. Ähnlich können kleinere Kapazitäten als Streukapazitäten ausgebildet sein.

Wandler und Verfahren nach Ausführungsbeispielen können insbesondere zur Energieversorgung von Modulen mit LEDs eingesetzt werden.

## Patentansprüche

1. Wandler für ein Leuchtmittel, umfassend
eine primärseitige Schaltung (20) mit einer Halbbrückenschaltung, die einen ersten Schalter (21) und einen zweiten Schalter (22) aufweist,
eine von der primärseitigen Schaltung (20) galvanisch getrennte Sekundärseite (30) mit einem Ausgang (35) zur Energieversorgung des Leuchtmittels (3; 5), und
eine Steuereinrichtung (14) zum Steuern des ersten Schalters (21) und des zweiten Schalters (22) der Halbbrückenschaltung,
**dadurch gekennzeichnet,**
**dass** die primärseitige Schaltung (20) einen LLC-Resonanzkreis (25-27) aufweist, und
**dass** die Steuereinrichtung (14) eingerichtet ist, um zum Einstellen einer Helligkeit
in einem ersten Betriebsmodus eine Schaltfrequenz (61-63) des ersten Schalters (21) und des zweiten Schalters (22) einzustellen, und
in einem zweiten Betriebsmodus während eines ersten Zeitabschnitts (71) ein getaktetes Schalten des ersten Schalters (21) und des zweiten Schalters (22) zu bewirken und während eines zweiten Zeitabschnitts (72) sowohl den ersten Schalter (21) als auch den zweiten Schalter (22) gleichzeitig in einen Aus-Zustand zu schalten, um am Ausgang (35) der Sekundärseite (30) ein gepulstes Ausgangssignal (90) zu erzeugen.

2. Wandler nach Anspruch 1,
wobei die Steuereinrichtung (14) eingerichtet ist, um während des ersten Zeitabschnitts (71) ein Schalten des ersten Schalters (21) und des zweiten Schalters (22) zu bewirken, wobei ein Schaltzyklus jeweils eine Schaltzyklusdauer (55) aufweist,
wobei eine Dauer (82) des zweiten Zeitabschnitts (72) größer als die Schaltzyklusdauer (55) ist.

3. Wandler nach Anspruch 2,
wobei die Dauer (82) des zweiten Zeitabschnitts (72) ein geradzahliges Vielfaches der Schaltzyklusdauer (55) ist.

4. Wandler nach einem der vorhergehenden Ansprüche,
wobei die Steuereinrichtung (14) eingerichtet ist, um in dem zweiten Betriebsmodus eine Dauer (81) des ersten Zeitabschnitts (71) und/oder eine Dauer (82) des zweiten Zeitabschnitts (72) abhängig von einer Soll-Helligkeit des Leuchtmittels (3; 5) einzustellen.

5. Wandler nach einem der vorhergehenden Ansprüche,
wobei in dem ersten Betriebsmodus die Schaltfrequenz (61-63) von der Steuereinrichtung (14) aus einer Mehrzahl verschiedener Schaltfrequenzen (65) wählbar ist, und
wobei in dem zweiten Betriebsmodus nur ein Teil (66) der Mehrzahl verschiedener Schaltfrequenzen (65) von der Steuereinrichtung (14) zum getakteten Schalten des ersten Schalters (21) und des zweiten Schalters (22) wählbar ist.

6. Wandler nach Anspruch 5,
wobei eine von der Steuereinrichtung (14) in dem ersten Betriebsmodus wählbare maximale Schaltfrequenz (f1) größer ist als eine von der Steuereinrichtung (14) in dem zweiten Betriebsmodus wählbare maximale Schaltfrequenz (f2) zum getakteten Schalten des ersten Schalters (21) und des zweiten Schalters (22).

7. Wandler nach einem der vorhergehenden Ansprüche,
wobei die Steuereinrichtung (14) eingerichtet ist, um abhängig von einem empfangenen Dimmbefehl einen Betriebsmodus zum Einstellen der Helligkeit aus dem ersten Betriebsmodus und dem zweiten Betriebsmodus auszuwählen.

8. Wandler nach einem der vorhergehenden Ansprüche.
wobei die Steuereinrichtung (14) eingerichtet ist, um zur Verringerung der Helligkeit unter einen Schwellenwert (100) von dem ersten Betriebsmodus in den zweiten Betriebsmodus umzuschalten.

9. Wandler nach einem der vorhergehenden Ansprüche,
wobei die Steuereinrichtung (14) eingerichtet ist, um zu ermitteln, ob das Leuchtmittel (3; 5) ein Amplitudendimmen erlaubt, und
wobei die Steuereinrichtung (14) eingerichtet ist, um nur im zweiten Betriebsmodus zu arbeiten, wenn das Leuchtmittel (3; 5) kein Amplitudendimmen erlaubt.

10. Wandler nach einem der vorhergehenden Ansprüche,
wobei die Steuereinrichtung (14) eine integrierte Halbleiterschaltung umfasst, und wobei die integrierte Halbleiterschaltung eingerichtet ist, um den ersten Schalter (21) und den zweiten Schalter (22) der Halbbrückenschaltung sowohl im ersten Betriebsmodus als auch im zweiten Betriebsmodus zu steuern.

11. LED-Konverter, umfassend
den Wandler (19) nach einem der vorhergehenden Ansprüche.

12. Verfahren zum Betreiben eines LLC-Resonanzwandlers (19) für ein Leuchtmittel, wobei der LLC-Resonanzwandler (19) eine primärseitige Schaltung (20) mit einer Halbbrückenschaltung, die einen ersten Schalter (21) und einen zweiten Schalter (22) aufweist, sowie eine von der primärseitigen Schaltung (20) galvanisch getrennte Sekundärseite (30) mit einem Ausgang (35) zur Energieversorgung des Leuchtmittels (3; 5) umfasst, wobei das Verfahren umfasst:
Auswählen eines Betriebsmodus zum Einstellen einer Helligkeit des Leuchtmittels (3; 5),
**dadurch gekennzeichnet,**
**dass** der LLC-Resonanzwandler (19) einen LLC-Resonanzkreis (25-27) aufweist,
**dass** in einem ersten Betriebsmodus eine Schaltfrequenz (61-63) des ersten Schalters (21) und des zweiten Schalters (22) eingestellt wird, um die Helligkeit einzustellen, und
**dass** in einem zweiten Betriebsmodus der erste Schalter (21) und der zweite Schalter (22) derart gesteuert werden, dass während eines ersten Zeitabschnitts (71) ein getaktetes Schalten des ersten Schalters (21) und des zweiten Schalters (22) bewirkt wird und während eines zweiten Zeitabschnitts (72) sowohl der erste Schalter (21) als auch der zweite Schalter (22) gleichzeitig in einen Aus-Zustand geschaltet werden, so dass am Ausgang (35) der Sekundärseite (30) ein gepulstes Ausgangssignal (90) erzeugt wird, um die Helligkeit einzustellen.

13. Verfahren nach Anspruch 12,
wobei eine integrierte Halbleiterschaltung (14) den ersten Schalter (21) und den zweiten Schalter (22) sowohl im ersten Betriebsmodus als auch im zweiten Betriebsmodus steuert.

14. Verfahren nach Anspruch 12 oder Anspruch 13,
wobei abhängig von einem Schwellenwertvergleich einer neuen Soll-Helligkeit ein Wechsel des Betriebsmodus zwischen dem ersten Betriebsmodus und dem zweiten Betriebsmodus durchgeführt wird.

15. Verfahren nach einem der Ansprüche 12-14,
das mit dem Wandler (19) nach einem der Ansprüche 1-10 durchgeführt wird.

## Claims

1. Converter for a luminaire comprising:
- a primary-side circuit (20) comprising a half-bridge circuit comprising a first switch (21) and a second switch (22)
- a secondary side (30) which is galvanically isolated from the primary-side circuit (20) and has an output (35) for supplying power to the luminaire (3; 5), and
- a control device (14) for controlling the first switch (21) and the second switch (22) of the half-bridge circuit,
**characterized in that**
- the primary-side circuit (20) comprises an LLC resonant circuit (25 - 27), and
- the control means (14) is configured to adjust a brightness
- in a first operating mode, adjustment of a switching frequency (61-63) of the first switch (21) and of the second switch (22), and
- a clocked switching of the first switch (21) and the second switch (22) in a second operating mode during a first time section (71), and, during a second time section (72), switching both the first switch (21) and the second switch (22) simultaneously into an off state in order to generate a pulsed output signal (90) at the output (35) of the secondary side (30).

2. Converter according to claim 1,
- wherein the control device (14) is configured to effect switching of the first switch (21) and the second switch (22) during the first time section (71), wherein a switching cycle has a switching cycle duration (55),
- wherein a duration (82) of the second time section (72) is greater than the switching cycle duration (55).

3. Converter according to claim 2,
- wherein the duration (82) of the second time section (72) is an even multiple of the switching cycle duration (55).

4. Converter according to one of the preceding claims,
- wherein the control device (14) is configured to determine a duration (81) of the first time section (71) in the second operating mode and/or a duration (82) of the second time section (72) as a function of a desired brightness of the luminaire (3; 5).

5. Converter according to one of the preceding claims,
- wherein, in the first operating mode, the switching frequency (61- 63) may be selected by the control device (14) from a plurality of different switching frequencies (65), and
- wherein only a part (66) of the plurality of different switching frequencies (65) may be selected by the control device (14) for the clocked switching of the first switch (21) and of the second switch (22) in the second operating mode.

6. Converter according to claim 5,
- wherein a maximum switching frequency (f1) which may be selected by the control device (14) in the first operating mode is greater than a maximum switching frequency (f2) which may be selected by the control device (14) in the second operating mode for the clocked switching of the first switch (21) and the second switch (22).

7. Converter according to one of the preceding claims,
- wherein the control device (14) is configured to select an operating mode for adjusting the brightness from the first operating mode and the second operating mode, depending on a received dimming command.

8. Converter according to one of the preceding claims.
- wherein the control device (14) is configured to switch from the first operating mode to the second operating mode to reduce the brightness below a threshold value (100).

9. Converter according to one of the preceding claims,
- wherein the control device (14) is configured to determine whether the luminaire (3; 5) permits amplitude dimming, and
- wherein the control device (14) is adapted to operate only in the second operating mode when the luminaire (3; 5) does not allow amplitude dimming.

10. Converter according to one of the preceding claims,
- wherein the control device (14) comprises a semiconductor circuit, and wherein the semiconductor circuit is configured to control the first switch (21) and the second switch (22) of the half-bridge circuit in both the first operating mode and the second operating mode.

11. LED converter comprising the converter (19) according to one of the preceding claims.

12. Method for operating an LLC resonant converter (19) for a luminaire, wherein the LLC resonant converter (19) comprises a primary-side circuit (20) having a half-bridge circuit comprising a first switch (21) and a second switch (22), as well as a secondary side (30) which is galvanically isolated from the primary-side circuit (20) and comprises an output (35) for supplying power to the luminaire (3; 5), wherein the method comprises:
- selecting an operation mode for setting a brightness of the luminaire (3; 5),
**characterized in that**
- the LLC resonant converter (19) comprises an LLC resonant circuit (25 - 27)
- in a first operating mode, a switching frequency (61 - 63) of the first switch (21) and the second switch (22) is adjusted to set the brightness, and
- the first switch (21) and the second switch (22) are so controlled in a second operating mode that a clocked switching of the first switch (21) and of the second switch (22) is effected during a first time section (71), and both the first switch (21) as well as the second switch (22) are simultaneously switched to an off state during a second time section (72), so that a pulsed output signal (90) is generated at the output (35) of the secondary side (30) in order to adjust the brightness.

13. Method according to claim 12,
- wherein an integrated semiconductor circuit (14) controls the first switch (21) and the second switch (22) in both the first operating mode and the second operating mode.

14. Method according to claim 12 or claim 13,
- wherein a change of the operating mode between the first operating mode and the second operating mode is carried out depending on a threshold value comparison of a new nominal brightness.

15. Method according to claim 12 - 14, which is carried out with the converter (19) according to one of the claims 1-10.

## Revendications

1. Transducteur pour un moyen d'éclairage, comprenant
un circuit (20) côté primaire avec un montage en demi-pont qui présente un premier commutateur (21) et un deuxième commutateur (22), un côté secondaire (30) isolé galvaniquement du circuit (20) côté primaire, avec une sortie (35) pour l'alimentation en énergie du moyen d'éclairage (3 ; 5), et
un dispositif de commande (14) pour la commande du premier commutateur (21) et du deuxième commutateur (22) du montage en demi-pont,
**caractérisé en ce que**
le circuit (20) côté primaire présente un circuit résonant LLC (25-27), et
le dispositif de commande (14) est agencé pour, à des fins réglage d'une luminosité, dans un premier mode de fonctionnement, régler une fréquence de commutation (61-63) du premier commutateur (21) et du deuxième commutateur (22) et,
dans un deuxième mode de fonctionnement, pendant un premier laps de temps (71), causer une commutation cadencée du premier commutateur (21) et du deuxième commutateur (22) et, pendant un deuxième laps de temps (72), commuter simultanément aussi bien le premier commutateur (21) que le deuxième commutateur (22) vers un état hors circuit pour produire à la sortie (35) du côté secondaire (30) un signal de sortie (90) pulsé.

2. Transducteur selon la revendication 1,
dans lequel le dispositif de commande (14) est agencé pour, pendant le premier laps de temps (71), causer une commutation du premier commutateur (21) et du deuxième commutateur (22), un cycle de commutation présentant respectivement une durée de cycle de commutation (55),
une durée (82) du deuxième laps de temps (72) étant supérieure à la durée de cycle de commutation (55).

3. Transducteur selon la revendication 2,
dans lequel la durée (82) du deuxième laps de temps (72) est un multiple pair de la durée de cycle de commutation (55).

4. Transducteur selon l'une des revendications précédentes,
dans lequel le dispositif de commande (14) est agencé pour, dans le deuxième mode de fonctionnement, régler une durée (81) du premier laps de temps (71) et/ou une durée (82) du deuxième laps de temps (72) en fonction d'une luminosité de consigne du moyen d'éclairage (3 ; 5).

5. Transducteur selon l'une des revendications précédentes,
dans lequel, dans le premier mode de fonctionnement, la fréquence de commutation (61-63) peut être choisie par le dispositif de commande (14) parmi une pluralité de différentes fréquences de commutation (65), et
dans lequel, dans le deuxième mode de fonctionnement, seule une partie (66) de la pluralité de différentes fréquences de commutation (65) peut être choisie par le dispositif de commande (14) pour la commutation cadencée du premier commutateur (21) et du deuxième commutateur (22).

6. Transducteur selon la revendication 5,
dans lequel une fréquence de commutation (f1) maximale pouvant être choisie par le dispositif de commande (14) dans le premier mode de fonctionnement est plus élevée qu'une fréquence de commutation (f2) maximale pouvant être choisie par le dispositif de commande (14) dans le deuxième mode de fonctionnement pour la commutation cadencée du premier commutateur (21) et du deuxième commutateur (22).

7. Transducteur selon l'une des revendications précédentes,
dans lequel le dispositif de commande (14) est agencé pour, en fonction d'une instruction de variation reçue, sélectionner un mode de fonctionnement pour le réglage de la luminosité parmi le premier mode de fonctionnement et le deuxième mode de fonctionnement.

8. Transducteur selon l'une des revendications précédentes,
dans lequel le dispositif de commande (14) est agencé pour commuter à partir du premier mode de fonctionnement vers le deuxième mode de fonctionnement afin de réduire la luminosité pour faire passer celle-ci au-dessous d'une valeur de seuil (100).

9. Transducteur selon l'une des revendications précédentes,
dans lequel le dispositif de commande (14) est agencé pour déterminer si le moyen d'éclairage (3 ; 5) permet un variation d'amplitude, et
dans lequel le dispositif de commande (14) est agencé pour fonctionner seulement dans le deuxième mode de fonctionnement si le moyen d'éclairage (3 ; 5) ne permet pas une variation d'amplitude.

10. Transducteur selon l'une des revendications précédentes,
dans lequel le dispositif de commande (14) comprend un montage en demi-pont intégré, et dans lequel le montage en demi-pont intégré est agencé pour commander le premier commutateur (21) et le deuxième commutateur (22) du montage en demi-pont aussi bien dans le premier mode de fonctionnement que dans le deuxième mode de fonctionnement.

11. Convertisseur LED, comprenant
le transducteur (19) selon l'une des revendications précédentes.

12. Procédé de fonctionnement d'un transducteur résonant LLC (19) pour un moyen d'éclairage, dans lequel le transducteur résonant LLC (19) présente un circuit (20) côté primaire avec un montage en demi-pont qui présente un premier commutateur (21) et un deuxième commutateur (22), ainsi qu'un côté secondaire (30) isolé galvaniquement du circuit (20) côté primaire avec une sorite (35) pour l'alimentation en énergie du moyen d'éclairage (3 ; 5), dans lequel le procédé comprend :
la sélection d'un mode de fonctionnement pour le réglage d'une luminosité du moyen d'éclairage (3 ; 5),
**caractérisé en ce que** le transducteur résonant LLC (19) présente un circuit résonant LLC (25-27),
dans un premier mode de fonctionnement, il est réglé une fréquence de commutation (61-63) du premier commutateur (21) et du deuxième commutateur (22) afin de régler la luminosité et,
dans un deuxième mode de fonctionnement, le premier commutateur (21) et le deuxième commutateur (22) sont commandés de telle sorte que, pendant un premier laps de temps (71), une commutation cadencée du premier commutateur (21) et du deuxième commutateur (22) est provoquée et, pendant un deuxième laps de temps (72), aussi bien le premier commutateur (21) que le deuxième commutateur (22) sont commutés simultanément vers un état hors circuit de telle sorte que, à la sortie (35) du côté secondaire (30), il est produit un signal de sortie (90) pulsé afin de régler la luminosité.

13. Procédé selon la revendication 12,
dans lequel un montage en demi-pont intégré (14) commande le premier commutateur (21) et le deuxième commutateur (22) aussi bien dans le premier mode de fonctionnement que dans le deuxième mode de fonctionnement.

14. Procédé selon la revendication 12 ou la revendication 13,
dans lequel, en fonction d'une comparaison de valeurs de seuil d'une nouvelle luminosité de consigne, un changement du mode de fonctionnement entre le premier mode de fonctionnement et le deuxième mode de fonctionnement est effectué.

15. Procédé selon l'une des revendications 12 à 14,
qui est effectué avec le transducteur (19) selon l'une des revendications 1 à 10.
